# EUROPEAN PATENT APPLICATION

(11) **EP 4 734 219 A1**
(43) Date of publication of application: **29.04.2026**
(21) Application number: 24934268.4
(22) Date of filing: 09.12.2024
(51) Int. Cl.: H01M 10/42, A62C 3/16, A62C 35/10, H01M 10/6556, H01M 10/658, H01M 50/289, H01M 50/249

(54) **BATTERY PACK**

(30) Priority: 02.04.2024 KR 20240044900
(71) Applicant: LG Energy Solution, Ltd., Seoul 07335 (KR)
(72) Inventor: HAN, Min-Hee, Daejeon 34122 (KR); KIM, Soo-Youl, Daejeon 34122 (KR); LEE, Jung-Hoon, Daejeon 34122 (KR); JUNG, Hye-Mi, Daejeon 34122 (KR)
(74) Representative: Plasseraud IP
(86) International application number: PCT/KR2024/020085
(87) International publication number: WO 2025/211534

(57) **Abstract**

Disclosed is a battery pack. The battery pack includes a base plate having a flow path therein; a plurality of battery cells positioned on the base plate; and a partition wall installed on an upper surface of the base plate and having an inner space in communication with the flow path.

## Description

### TECHNICAL FIELD

The present disclosure relates to a battery pack.

The present application claims priority to Korean Patent Application No. 10-2024-0044900 filed on April 2, 2024 in the Republic of Korea, the disclosure of which is incorporated herein by reference.

### BACKGROUND ART

As the demand for portable electronic products such as laptops, video cameras, and portable phones is rapidly increasing, and robots, electric vehicles, or the like are commercialized in earnest, research on high-performance secondary batteries capable of repeated charging and discharging is actively underway.

Currently, commercially available secondary batteries include nickel-cadmium batteries, nickel-hydrogen batteries, nickel-zinc batteries, lithium secondary batteries and the like, and among them, lithium secondary batteries have little or no memory effect, and thus they are gaining more attention than nickel-based secondary batteries for their advantages that recharging can be done whenever it is convenient, the self-discharge rate is very low and the energy density is high.

Lithium secondary batteries primarily comprise lithium-based oxides and carbon materials for a positive electrode active material and a negative electrode active material, respectively. A lithium secondary battery includes an electrode assembly including a positive electrode plate and a negative electrode plate coated with the positive electrode active material and the negative electrode active material, respectively, with a separator interposed between the positive electrode plate and the negative electrode plate, and a sealed packaging or battery case accommodating the electrode assembly together with an electrolyte solution.

In general, lithium secondary batteries may be classified into can-type secondary batteries in which the electrode assembly is included in a metal can and pouch-type secondary batteries in which the electrode assembly is included in a pouch of an aluminum laminate sheet, according to the shape of the battery case.

Recently, secondary batteries have been widely used in medium and large devices such as electric vehicles and energy storage systems (ESSs) for driving and storing energy, as well as in small devices such as portable electronic devices. A plurality of secondary batteries may be electrically connected and stored inside a module case, thereby forming a battery module. In addition, multiple battery modules may be connected to each other to form a battery pack.

However, if a plurality of secondary batteries (battery cells) or a plurality of battery modules are crowded in a small space, they may be vulnerable to thermal events. In particular, if an event such as thermal runaway occurs in one battery cell, high temperature gas, flame, or heat may be generated. If the gases, flames, heat, etc. is transferred to other battery cells included in the same battery module, an explosive chain reaction situation such as thermal propagation may occur. Also, this chain reaction not only causes accidents such as fire or explosion in the corresponding battery module, but may also cause fire or explosion in other battery modules.

Moreover, in the case of medium to large-sized battery packs such as electric vehicles, a large number of battery cells and battery modules are included to increase output and/or capacity, so the risk of thermal chain reaction may increase further. Furthermore, in the case of a battery pack mounted on an electric vehicle, etc., users such as drivers may be present nearby. Therefore, if a thermal event occurring in a specific battery cell or module is not properly controlled and a chain reaction occurs, it may cause not only great property damage but also human casualties. Therefore, it is necessary to properly control thermal events occurring in battery cells or modules to improve the thermal stability of the battery pack.

### DISCLOSURE

### Technical Problem

The present disclosure is designed to solve these and other problems.

The present disclosure is directed to providing a battery pack with improved safety when a thermal event occurs.

The present disclosure is also directed to directly injecting a cooling fluid into a battery module when a thermal event occurs.

The present disclosure is also directed to injecting a cooling fluid to each occurrence point when a thermal event occurs at a plurality of points.

The present disclosure is also directed to providing a battery pack that may maintain a high pressure while a cooling fluid is being injected.

### Technical Solution

In one aspect of the present disclosure, there is provided a battery pack comprising: a base plate having a flow path therein; a plurality of battery cells positioned on the base plate; and a partition wall installed on an upper surface of the base plate and having an inner space in communication with the flow path.

In addition, the partition wall may include an injection hole configured to communicate the inner space with an outside; and a cap configured to block the injection hole.

In addition, the injection hole may be provided in plurality, and the plurality of injection holes may be arranged along a longitudinal direction of the partition wall.

In addition, the cap may have a thread formed on a peripheral surface thereof.

In addition, the partition wall may further include a first sealing member disposed at a periphery of the injection hole.

In addition, the cap may be configured to open the injection hole when a thermal event occurs from the plurality of battery cells.

In addition, the base plate may further include a port provided in the upper surface and communicating with the flow path.

In addition, the port may be inserted into the inner space of the partition wall.

In addition, the base plate may further include a second sealing member disposed at a periphery of the port.

In addition, the port may have a thread formed on a peripheral surface thereof.

In addition, the battery pack may further comprise a fastening member configured to penetrate the base plate and inserted into the partition wall.

In addition, the inner space of the partition wall may include a first sub-flow path extending along an upper and lower direction; and a second sub-flow path communicating with the first sub-flow path and extending along a longitudinal direction of the partition wall.

In addition, the battery pack may further comprise a third sub-flow path communicating with the second sub-flow path and extending along the upper and lower direction.

In addition, the inner space of the partition wall may include a fourth sub-flow path extending along a longitudinal direction of the partition wall; and a fifth sub-flow path communicating with the fourth sub-flow path and extending along an upper and lower direction.

In addition, the battery pack may further comprise a module case installed on the upper surface of the base plate and providing a space therein, and the plurality of battery cells may be accommodated inside the module case.

In another aspect of the present disclosure, there is also provided a vehicle, comprising the battery pack according to the present disclosure.

### Advantageous Effects

According to at least one of the embodiments of the present disclosure, it is possible to improve thermal stability of a battery pack.

According to at least one of the embodiments of the present disclosure, heat propagation may be suppressed.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram showing a battery pack according to an embodiment of the present disclosure.
FIG. 2 is a diagram showing the battery pack of FIG. 1, in which some components are exploded.
FIG. 3 is a drawing showing a battery module separated from the battery pack of FIG. 2.
FIG. 4 is a drawing showing some components of the battery pack of FIG. 1.
FIG. 5 is a cross-sectional view taken along the cutting line A-A' of FIG. 4.
FIG. 6 is a drawing showing some components of the battery pack of FIG. 1.
FIG. 7 is a drawing showing the combined configuration of FIG. 6.
FIG. 8 is a cross-sectional view taken along the cutting line B-B' of FIG. 7.
FIG. 9 is a drawing showing a modified embodiment of FIG. 8.
FIG. 10 is a drawing showing some components of the battery pack of FIG. 1.
FIG. 11 is a drawing showing the combined configuration of FIG. 10.
FIG. 12 is a cross-sectional view taken along the cutting line C-C' of FIG. 11.
FIG. 13 is a cross-sectional view taken along the cutting line D-D' of FIG. 1.
FIG. 14 is an enlarged drawing showing a part E of FIG. 13.
FIG. 15 is an enlarged drawing showing the part E of FIG. 13, when a thermal event occurs.
FIG. 16 is an enlarged drawing showing a part F of FIG. 13.
FIG. 17 is an enlarged drawing showing the part F of FIG. 13, when a thermal event occurs.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

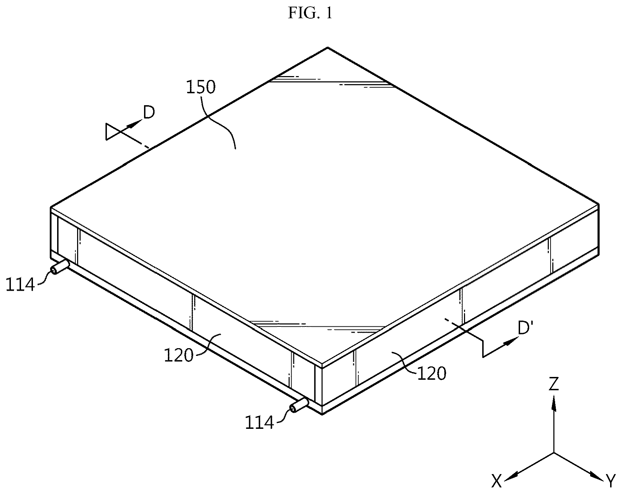

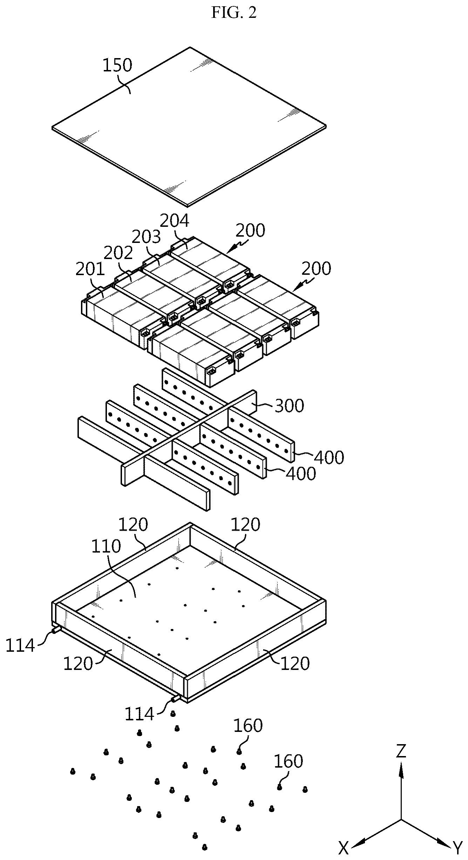

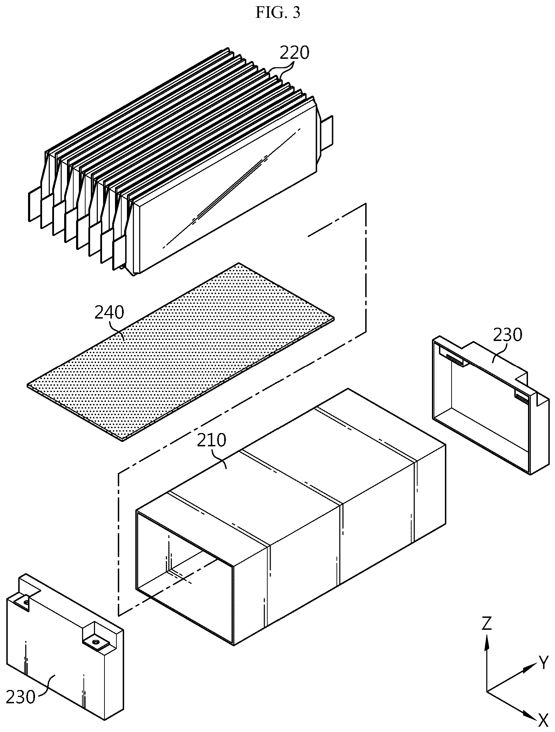

FIG. 1 is a diagram showing a battery pack according to an embodiment of the present disclosure. FIG. 2 is a diagram showing the battery pack of FIG. 1, in which some components are exploded. FIG. 3 is a drawing showing a battery module 200, 201, 202, 203, 204 separated from the battery pack of FIG. 2.

Referring to FIGS. 1 to 3, the battery pack according to an embodiment of the present disclosure may include a base plate 110 and a plurality of battery cells 220.

The base plate 110 may have a rectangular shape. The base plate 110 may have a flat shape. The base plate 110 may form an outer appearance of the battery pack. The base plate 110 may provide an inner space 410 of the battery pack.

The battery module 200, 201, 202, 203, 204 may be provided in plurality. The battery modules 200, 201, 202, 203, 204 may be installed, fastened, coupled, fixed, or attached to the upper surface of the base plate 110.

The battery module 200, 201, 202, 203, 204 may be provided in plurality. Each of the battery modules 200, 201, 202, 203, 204 may include a module case 210, a battery cell 220, an end cover 230, and a heat conduction member 240. The module case 210 may have a rectangular parallelepiped shape. The module case 210 may have an open shape at the left side and the right side. The module case 210 may form the outer appearance of the battery modules 200, 201, 202, 203, 204. The module case 210 may provide a space therein.

The battery cell 220 may be accommodated inside the module case 210. The battery cell 220 may be provided in plurality. At this time, the battery cell 220 may mean a secondary battery. In addition, the battery cell 220 may have a pouch shape. The plurality of battery cells 220 may be stacked or arranged in the front and rear direction.

The heat conduction member 240 may be positioned between the plurality of battery cells 220 and the module case 210. The heat conduction member 240 may be positioned below the plurality of battery cells 220. The heat conduction member 240 may be made of a resin. In addition, the heat conduction member 240 may fix the plurality of battery cells 220 to the module case 210. In addition, the heat conduction member 240 may transfer heat generated from the plurality of battery cells 220 to the module case 210.

The end cover 230 may be provided as a pair. The pair of end covers 230 may be coupled, fastened, fixed or attached to the left side and the right side of the module case 210, respectively. The end cover 230 may form the outer appearance of the battery modules 200, 201, 202, 203, 204.

Referring to FIGS. 1 to 3, the battery pack according to an embodiment of the present disclosure may include a side wall 120 and a pack cover 150.

The side wall 120 may be installed, fastened, coupled, fixed or attached to the upper surface of the base plate 110. The side wall 120 may be composed of four pieces. The side wall 120 may be arranged along the periphery of the base plate 110. The side wall 120 may form the outer appearance of the battery pack. The side wall 120 may provide an inner space.

The battery module 200, 201, 202, 203, 204 may be surrounded by the side wall 120.

The pack cover 150 may have a rectangular plate shape. The pack cover 150 may have a flat plate shape. The pack cover 150 may form the outer appearance of the battery pack. The pack cover 150 may cover the inner space of the battery pack. The pack cover 150 may be installed, fastened, coupled, fixed or attached to the side wall 120. In addition, the pack cover 150 may cover the upper surface of the battery module 200, 201, 202, 203, 204.

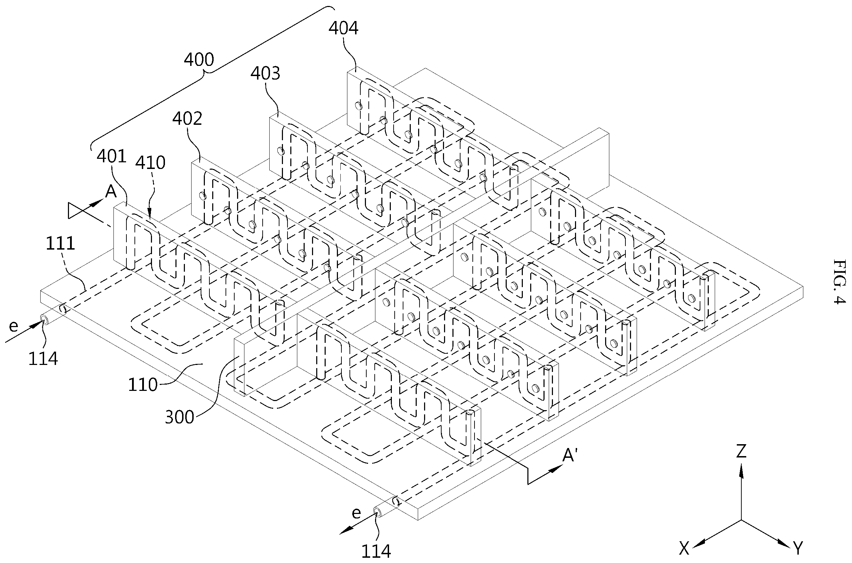

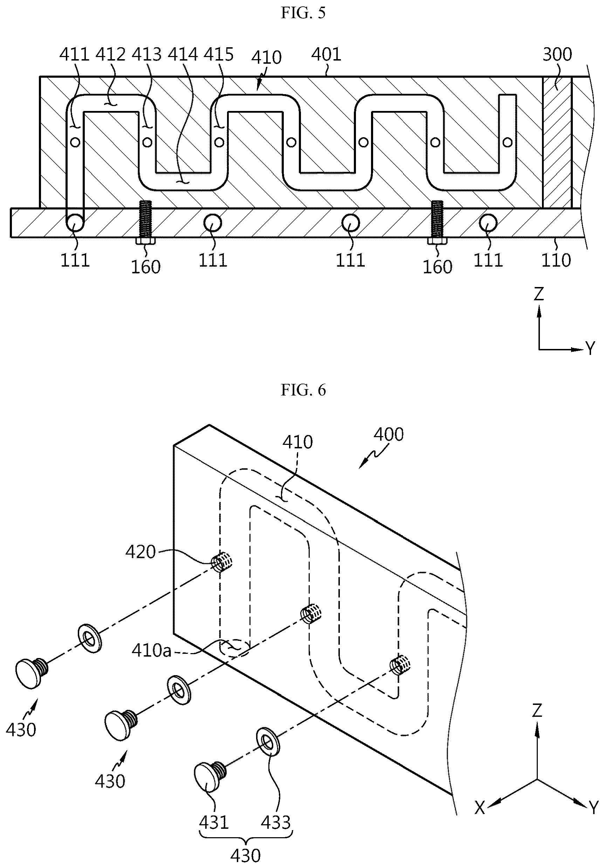

FIG. 4 is a drawing showing some components of the battery pack of FIG. 1. FIG. 5 is a cross-sectional view taken along the cutting line A-A' of FIG. 4.

Referring to FIGS. 1 to 5, the battery pack according to an embodiment of the present disclosure may include a partition wall 400, 401, 402, 403, 404.

The base plate 110 may have a flow path 111 formed therein. At this time, the flow path 111 may be referred to as a base flow path 111. At this time, the base plate 110 may be referred to as a heatsink 110.

The partition wall 400, 401, 402, 403, 404 may be provided in plurality. The partition walls 400, 401, 402, 403, 404 may be installed, fastened, fixed, coupled, or attached to the upper surface of the base plate 110. The partition walls 400, 401, 402, 403, 404 may partition the inner space 410 of the battery pack. The battery modules 200, 201, 202, 203, 204 may be positioned in the spaces partitioned by the partition walls 400, 401, 402, 403, 404, respectively. Also, the partition wall 400, 401, 402, 403, 404 may face at least one side of the battery module 200, 201, 202, 203, 204.

The partition wall 400, 401, 402, 403, 404 may have a space 410 therein. The inner space 410 of the partition wall 400, 401, 402, 403, 404 may be communicated with the base flow path 111. The inner space 410 may also be referred to as a fire extinguishing tank 410 or a fire extinguishing flow path 410.

A cooling fluid e may flow in the base flow path 111. Also, the cooling fluid e may be introduced into and stored in the inner space 410 of the partition wall 400, 401, 402, 403, 404. The cooling fluid e may also be referred to as a cooling liquid e, a cooling gas e, a fire extinguishing fluid e, or a fire extinguishing member e. For example, the cooling fluid e may be an insulating oil.

According to this configuration of the present disclosure, the thermal safety of the battery pack may be improved. When a thermal event occurs from the battery module 200, 201, 202, 203, 204 or the battery cell 220, the cooling fluid e stored in the inner space 410 of the partition wall 400, 401, 402, 403, 404 may be supplied, sprayed or injected to the battery module 200, 201, 202, 203, 204 or the battery cell 220. As a result, the heat transfer may be suppressed or blocked. In addition, the cooling efficiency of the battery pack may be improved. Also, the cooling fluid e may function as a fire extinguishing member.

Referring to FIGS. 1 to 5, the battery pack according to an embodiment of the present disclosure may include a second port 114 and a center wall 300.

The second port 114 may be provided on the base plate 110. The second port 114 may be provided as a pair. The cooling fluid e may flow into and out of the base flow path 111 through the second port 114.

The center wall 300 may be installed, fastened, fixed, coupled or attached to the upper surface of the base plate 110. The center wall 300 may partition the inner space 410 of the battery pack. The plurality of partition walls 400, 401, 402, 403, 404 may be arranged in the spaces partitioned by the center wall 300, respectively.

Referring to FIGS. 1 to 5, the battery pack according to an embodiment of the present disclosure may include a fastening member 160. The fastening member 160 may penetrate the base plate 110. Also, the fastening member 160 may be inserted into the partition wall 400, 401, 402, 403, 404. The fastening member 160 may fasten the base plate 110 and the partition wall 400, 401, 402, 403, 404. The fastening member 160 may be provided in plurality. The plurality of fastening members 160 may be arranged along the longitudinal direction of the partition wall 400, 401, 402, 403, 404. Also, the fastening member 160 may be fastened to a location where the inner space 410 of the partition wall 400, 401, 402, 403, 404 is not formed.

According to this configuration of the present disclosure, the rigidity of the battery pack may be improved.

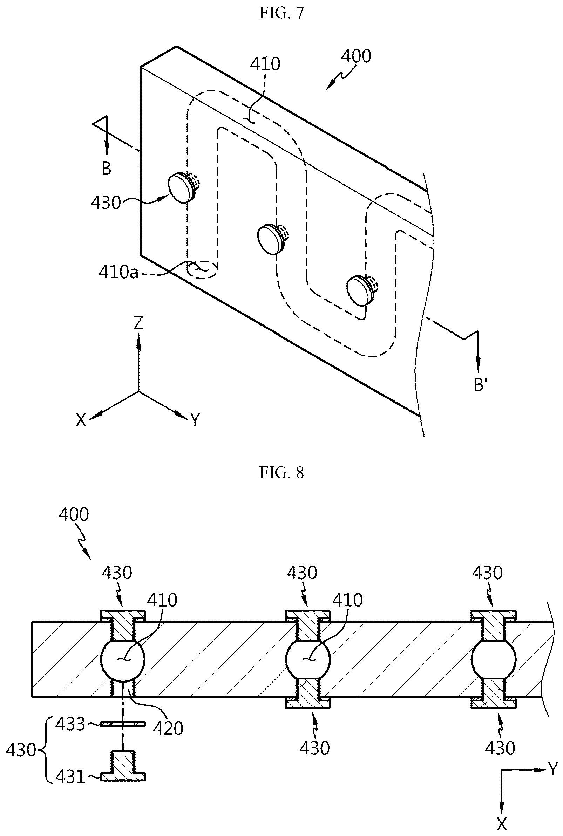

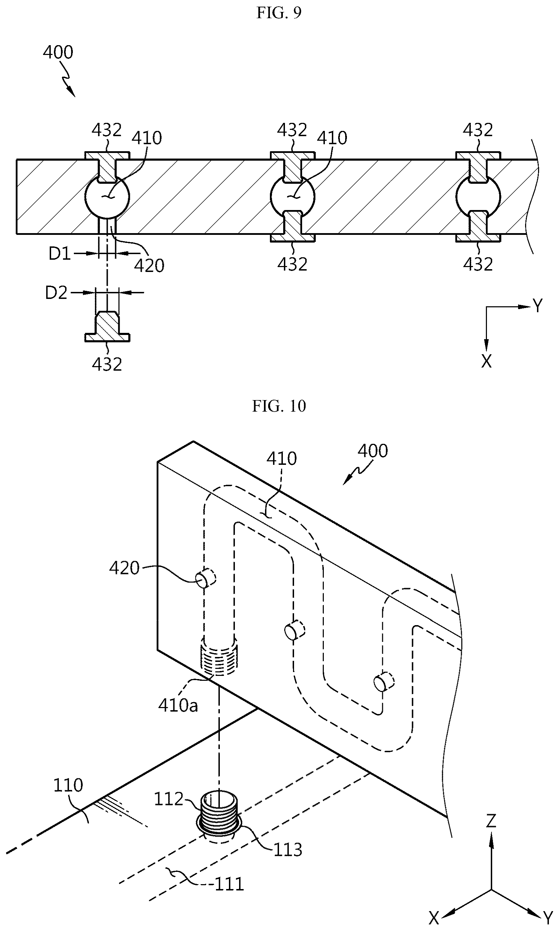

FIG. 6 is a drawing showing some components of the battery pack of FIG. 1. FIG. 7 is a drawing showing the combined configuration of FIG. 6. FIG. 8 is a cross-sectional view taken along the cutting line B-B' of FIG. 7. FIG. 9 is a drawing showing a modified embodiment of FIG. 8.

Referring to FIGS. 6 to 9, the partition wall 400, 401, 402, 403, 404 of the battery pack according to an embodiment of the present disclosure may include an injection hole 420 and a cap 430. The injection hole 420 may communicate the inner space 410 of the partition wall 400, 401, 402, 403, 404 with the outside of the partition wall 400, 401, 402, 403, 404. The injection hole 420 may be provided in plurality. The plurality of injection holes 420 may be positioned along the longitudinal direction of the partition wall 400, 401, 402, 403, 404. The injection hole 420 may be formed in the front or rear surface of the partition wall 400, 401, 402, 403, 404. The first partition wall 401 may have a plurality of injection holes 420 in the rear surface. The second partition wall 402, the third partition wall 403, and the fourth partition wall 404 may have a plurality of injection holes 420 in the front and rear surfaces, respectively.

The cap 430 may block the injection hole 420. The cap 430 may be provided at each injection hole 420. The cap 430 may seal the injection hole 420.

According to this configuration of the present disclosure, the thermal safety of the battery pack may be improved. When a thermal event occurs from the battery module 200, 201, 202, 203, 204 or the battery cell 220, the cooling fluid e stored in the inner space 410 of the partition wall 400, 401, 402, 403, 404 may be supplied, sprayed or injected to the battery module 200, 201, 202, 203, 204 or the battery cell 220 through the injection hole 420. In addition, the cap 430 may seal the injection hole 420 until the thermal event occurs.

Referring to FIGS. 6 to 9, the cap 430 of the battery pack according to an embodiment of the present disclosure may be configured to open the injection hole 420 when a thermal event occurs. When a thermal event occurs from the plurality of battery cells 220 or the battery module 200, 201, 202, 203, and 204, a venting gas, flame, or ignitable particles may be emitted. The cap 430 may be made of a material that may melt at a low temperature. For example, the cap 430 may contain an alloy material having a melting point between 60 and 100°C. Alternatively, the cap 430 may contain a thermoplastic material having a melting point between 60 and 100°C.

According to this configuration of the present disclosure, the thermal safety of the battery pack may be improved. When a thermal event occurs from the battery module 200, 201, 202, 203, 204 or the battery cell 220, the cap 430 may melt or be damaged, and the injection hole 420 may be opened. As a result, the cooling fluid e may be injected to the battery cell 220 or the battery module 200, 201, 202, 203, 204 where the thermal event has occurred through the injection hole 420. Depending on the type of thermal event that occurs, a plurality of the caps 430 may melt, and the cooling fluid e may be injected through the plurality of the injection holes 420.

Referring to FIGS. 6 to 9, the plurality of injection holes 420 of the battery pack according to an embodiment of the present disclosure may be positioned along the longitudinal direction of the partition wall 400, 401, 402, 403, 404. In addition, the plurality of injection holes 420 may be arranged along the height direction of the partition wall 400, 401, 402, 403, 404. In addition, the cap 430 may be provided for each injection hole 420.

According to this configuration of the present disclosure, the thermal safety of the battery pack may be improved. Since a plurality of injection holes 420 are arranged at various locations, the cap 430 at the part where the thermal event occurs may be melted, and the fire extinguishing effect may be improved by injecting the cooling fluid e to that part.

Referring to FIGS. 8 and 9, the cap 430 of the battery pack according to an embodiment of the present disclosure may include a first cap 431 or a second cap 432. The cap 430 may be used as a term collectively referring to the first cap 431 and the second cap 432. The first cap 431 may have a thread on a peripheral surface. Also, the injection hole 420 may include a thread on a periphery. The thread of the first cap 431 and the thread of the injection hole 420 may be engaged.

According to this configuration of the present disclosure, the bonding property of the cap 430 and the partition wall 400, 401, 402, 403, 404 may be improved. As a result, the sealing property of the first cap 431 may be improved.

Referring to FIG. 8, the battery pack according to an embodiment of the present disclosure may include a first sealing member 433. The first sealing member 433 may be arranged along the periphery of the injection hole 420. The first sealing member 433 may contain an elastic material. In addition, the first sealing member 433 may have a ring shape.

According to this configuration of the present disclosure, the sealing property of the first cap 431 may be improved.

Referring to FIG. 9, the second cap 432 of the battery pack according to an embodiment of the present disclosure may have a diameter (D2) larger than a diameter (D1) of the injection hole 420. In this case, the second cap 432 may contain an elastic material. The second cap 432 may be coupled to the injection hole 420 by press-fitting.

According to this configuration of the present disclosure, the sealing property of the second cap 432 may be improved.

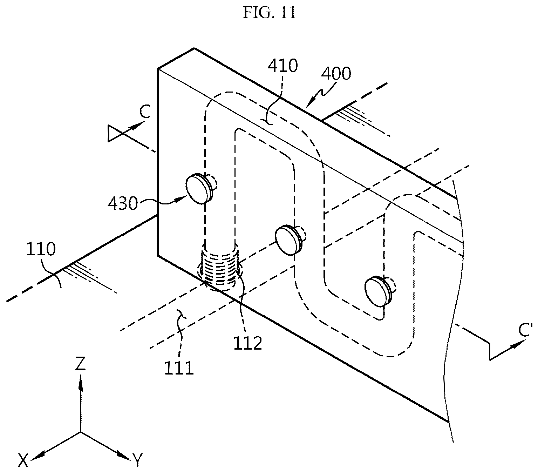

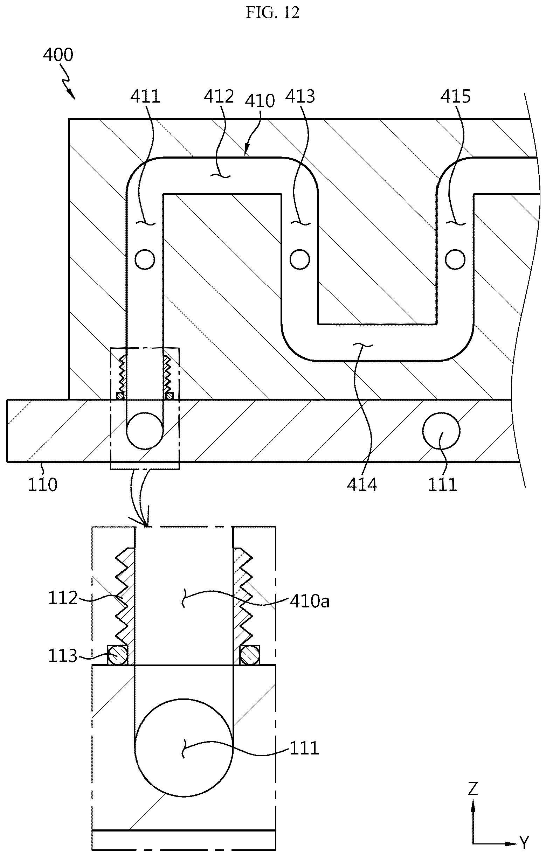

FIG. 10 is a drawing showing some components of the battery pack of FIG. 1. FIG. 11 is a drawing showing the combined configuration of FIG. 10. FIG. 12 is a cross-sectional view taken along the cutting line C-C' of FIG. 11.

Referring to FIGS. 10 to 12, the base plate 110 of the battery pack according to an embodiment of the present disclosure may further include a first port 112 provided in the upper surface and communicating with the base flow path 111.

The first port 112 may be formed integrally with the base plate 110. In addition, the first port 112 may be provided in plurality. The plurality of first ports 112 may be provided in a one-to-one correspondence with the partition walls 400, 401, 402, 403, 404. The first port 112 may be coupled with the partition wall 400, 401, 402, 403, 404 or the inlet hole 410a.

According to this configuration of the present disclosure, the coupling between the base plate 110 and the partition walls 400, 401, 402, 403, and 404 may be improved. As a result, the connection between the base flow path 111 and the inner space 410 may be improved.

Referring to FIGS. 10 to 12, the first port 112 of the battery pack according to an embodiment of the present disclosure may be inserted into the inner space 410 of the partition wall 400, 401, 402, 403, 404. Alternatively, the first port 112 may be inserted into the inlet hole 410a of the partition wall 400, 401, 402, 403, 404.

According to this configuration of the present disclosure, the coupling between the base plate 110 and the partition wall 400, 401, 402, 403, 404 may be improved. As a result, the connection between the base flow path 111 and the inner space 410 may be improved.

Referring to FIGS. 10 to 12, the first port 112 of the battery pack according to an embodiment of the present disclosure may have a thread on a peripheral surface thereof. Also, the inlet hole 410a may have a thread on a periphery thereof. The thread of the first port 112 and the thread of the inlet hole 410a may be engaged.

According to this configuration of the present disclosure, the coupling between the base plate 110 and the partition wall 400, 401, 402, 403, 404 may be improved. As a result, the sealing between the first port 112 and the inlet hole 410a may be improved.

Referring to FIGS. 10 to 12, the battery pack according to an embodiment of the present disclosure may include a second sealing member 113. The second sealing member 113 may be arranged along the periphery of the inlet hole 410a or the periphery of the first port 112. The second sealing member 113 may contain an elastic material. In addition, the second sealing member 113 may have a ring shape.

According to this configuration of the present disclosure, the sealing between the first port 112 and the inlet hole 410a may be improved.

Referring to FIGS. 10 to 12, the inner space 410 of the partition wall 400, 401, 402, 403, 404 of the battery pack according to an embodiment of the present disclosure may include a first sub-flow path 411 and a second sub-flow path 412. The first sub-flow path 411 may be communicated with the inlet hole 410a. The first sub-flow path 411 may extend along the upper and lower direction, the height direction of the partition wall 400, 401, 402, 403, 404, or the Z-axis direction. Also, the second sub-flow path 412 may be communicated with the first sub-flow path 411. The second sub-flow path 412 may extend from an upper end of the first sub-flow path 411. The second sub-flow path 412 may extend in the right and left direction, the longitudinal direction of the partition wall 400, 401, 402, 403, 404, or the Y-axis direction.

According to this configuration of the present disclosure, since the inner space 410 of the partition wall 400, 401, 402, 403, 404 extends in the upper and lower direction or the left and right direction, the injection hole 420 may be arranged at various positions. In addition, since the inner space 410 of the partition wall 400, 401, 402, 403, 404 is configured to have a plurality of sub-flow paths, the pressure of the cooling fluid e may be maintained high.

Referring to FIGS. 10 to 12, the inner space 410 of the partition wall 400, 401, 402, 403, 404 of the battery pack according to an embodiment of the present disclosure may include a third sub-flow path 413. The third sub-flow path 413 may be communicated with the second sub-flow path 412. The third sub-flow path 413 may extend from the lower end of the second sub-flow path 412. The third sub-flow path 413 may extend along the upper and lower direction, the height direction of the partition wall 400, 401, 402, 403, 404, or the Z-axis direction.

According to this configuration of the present disclosure, since the inner space 410 of the partition wall 400, 401, 402, 403, 404 extends in the upper and lower direction or the left and right direction, the injection hole 420 may be arranged at various positions. In addition, since the inner space 410 of the partition wall 400, 401, 402, 403, 404 is configured to have a plurality of sub-flow paths, the pressure of the cooling fluid e may be maintained high.

Referring to FIGS. 10 to 12, the inner space 410 of the partition wall 400, 401, 402, 403, 404 of the battery pack according to an embodiment of the present disclosure may include a fourth sub-flow path 414 and a fifth sub-flow path 415. The fourth sub-flow path 414 may be communicated with the third sub-flow path 413. The fourth sub-flow path 414 may extend along the upper and lower direction, the height direction of the partition wall 400, 401, 402, 403, 404, or the Z-axis direction. The fourth sub-flow path 414 may extend from the right end of the third sub-flow path 413.

The fifth sub-flow path 415 may be communicated with the fourth sub-flow path 414. The fifth sub-flow path 415 may extend from an upper end of the fourth sub-flow path 414. The fifth sub-flow path 415 may extend along the upper and lower direction, the height direction of the partition wall 400, 401, 402, 403, 404, or the Z-axis direction.

According to this configuration of the present disclosure, since the inner space 410 of the partition wall 400, 401, 402, 403, 404 extends in the upper and lower direction or the left and right direction, the injection hole 420 may be arranged at various positions. In addition, since the inner space 410 of the partition wall 400, 401, 402, 403, 404 is configured to have a plurality of sub-flow paths, the pressure of the cooling fluid e may be maintained high.

Referring to FIGS. 10 to 12, the inner space 410 of the partition wall 400, 401, 402, 403, 404 of the battery pack according to an embodiment of the present disclosure may be configured such that the first sub-flow path 411 to the fifth sub-flow path 415 are repeatedly connected. In addition, it may be configured that the inner space 410 of the partition wall 400, 401, 402, 403, 404 communicates with the outside through only one inlet hole 410a. As a result, the cooling fluid e located in the inner space 410 may not flow.

According to this configuration of the present disclosure, since the inner space 410 of the partition wall 400, 401, 402, 403, 404 may extend in the upper and lower direction or the left and right direction, the injection hole 420 may be arranged at various positions. In addition, the pressure of the cooling fluid e located in the inner space 410 of the partition wall 400, 401, 402, 403, 404 may be maintained high. As a result, the cooling fluid e may be quickly discharged when a thermal event occurs.

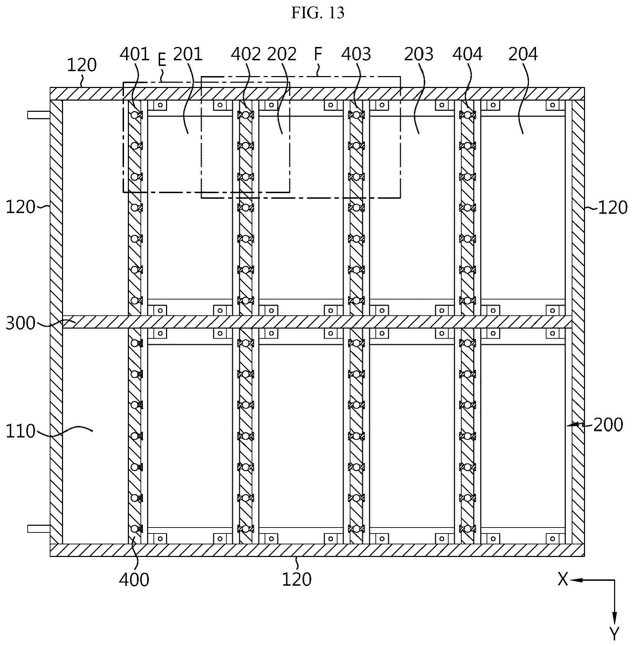

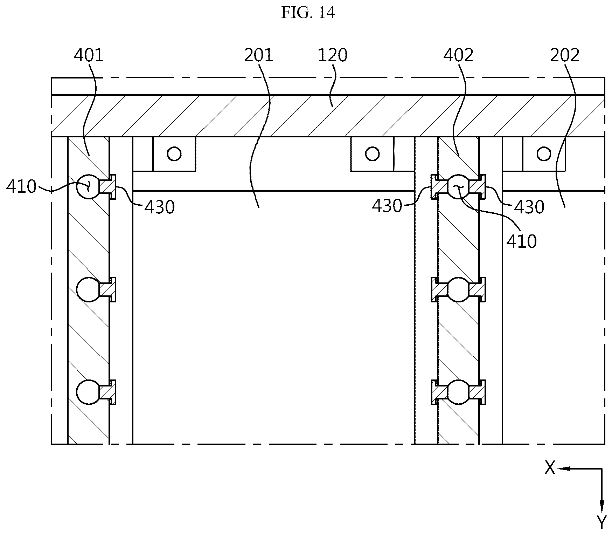

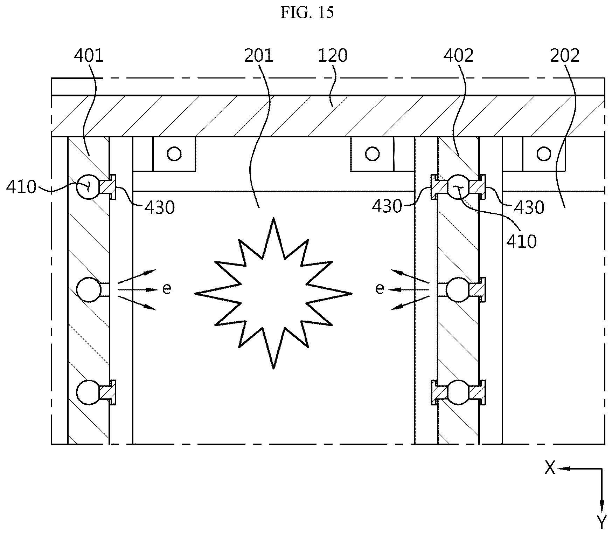

FIG. 13 is a cross-sectional view taken along the cutting line D-D' of FIG. 1. FIG. 14 is an enlarged drawing showing a part E of FIG. 13. FIG. 15 is an enlarged drawing showing the part E of FIG. 13, when a thermal event occurs.

Referring to FIGS. 13 to 15, the first battery module 201 of the battery pack according to an embodiment of the present disclosure may be located between the first partition wall 401 and the second partition wall 402. The first partition wall 401 may include an injection hole 420 and a cap 430 at a rear side. The second partition wall 402 may include an injection hole 420 and a cap 430 at a front side and a rear side, respectively. When a thermal event occurs from the first battery module 201, the cap 430 of the first partition wall 401 or the second partition wall 402 may open the injection hole 420. As a result, the cooling fluid e located in the inner space 410 may be injected to the first battery module 201.

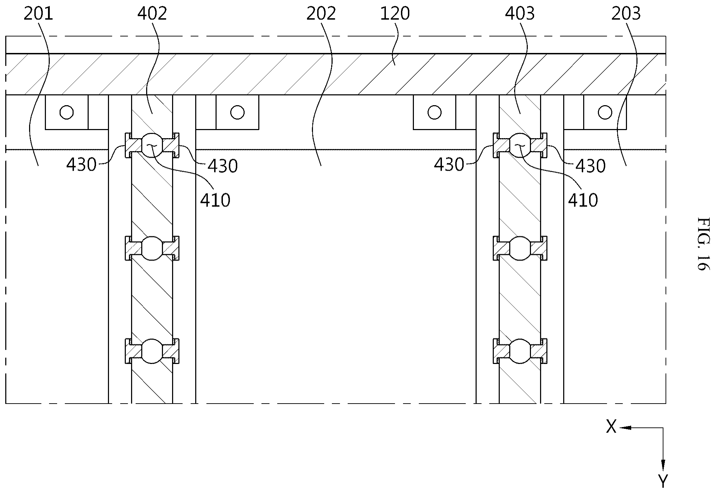

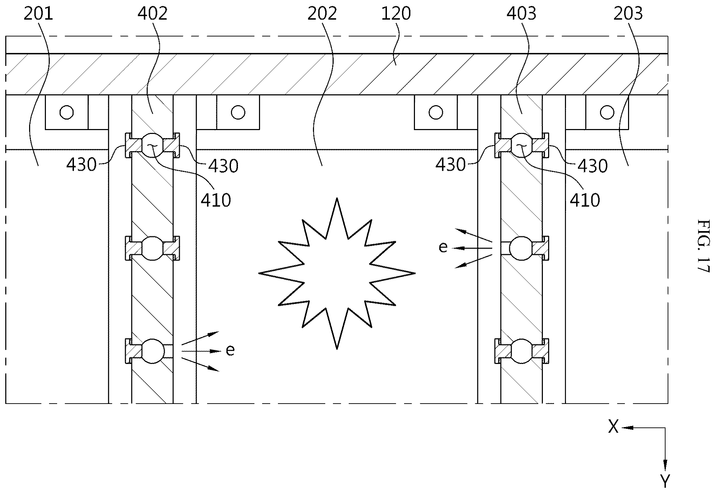

FIG. 16 is an enlarged drawing showing a part F of FIG. 13. FIG. 17 is an enlarged drawing showing the part F of FIG. 13, when a thermal event occurs.

Referring to FIGS. 13, 16, and 17, the second battery module 202 of the battery pack according to an embodiment of the present disclosure may be located between the second partition wall 402 and the third partition wall 403. The third partition wall 403 may include an injection hole 420 and a cap 430 at the front and rear sides, respectively. When a thermal event occurs from the second battery module 202, the cap 430 of the second partition wall 402 or the third partition wall 403 may open the injection hole 420. As a result, the cooling fluid e located in the inner space 410 may be injected to the second battery module 202.

In addition, when the battery pack according to the present disclosure may further include various components, for example components of the battery pack known at the time of filing of this application, such as a BMS, a bus bar, a relay, a current sensor, etc.

A vehicle according to the present disclosure may include the battery pack according to the present disclosure described above. The battery pack according to the present disclosure may be applied to vehicles such as electric vehicles or hybrid vehicles. In addition, the vehicle according to the present disclosure may further include various other components included in the vehicle, for example a body, a motor, and control devices such as an ECU (electronic control unit) in addition to the battery pack.

The terms indicating directions such as upper, lower, left, right, front and rear are used for convenience of description, but it is obvious to those skilled in the art that the terms may change depending on the position of the stated element or an observer.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A battery pack comprising:
a base plate having a flow path therein;
a plurality of battery cells positioned on the base plate; and
a partition wall installed on an upper surface of the base plate and having an inner space in communication with the flow path.

2. The battery pack according to claim 1,
wherein the partition wall includes:
an injection hole configured to communicate the inner space with an outside; and
a cap configured to block the injection hole.

3. The battery pack according to claim 2,
wherein the injection hole is provided in plurality, and
wherein the plurality of injection holes are arranged along a longitudinal direction of the partition wall.

4. The battery pack according to claim 2,
wherein the cap has a thread formed on a peripheral surface thereof.

5. The battery pack according to claim 2,
wherein the partition wall further includes a first sealing member disposed at a periphery of the injection hole.

6. The battery pack according to claim 2,
wherein the cap is configured to open the injection hole when a thermal event occurs from the plurality of battery cells.

7. The battery pack according to claim 1,
wherein the base plate further includes a port provided in the upper surface and communicating with the flow path.

8. The battery pack according to claim 7,
wherein the port is inserted into the inner space of the partition wall.

9. The battery pack according to claim 7,
wherein the base plate further includes a second sealing member disposed at a periphery of the port.

10. The battery pack according to claim 7,
wherein the port has a thread formed on a peripheral surface thereof.

11. The battery pack according to claim 1, further comprising:
a fastening member configured to penetrate the base plate and inserted into the partition wall.

12. The battery pack according to claim 1,
wherein the inner space of the partition wall includes:
a first sub-flow path extending along an upper and lower direction; and
a second sub-flow path communicating with the first sub-flow path and extending along a longitudinal direction of the partition wall.

13. The battery pack according to claim 12,
wherein the inner space of the partition wall further includes a third sub-flow path communicating with the second sub-flow path and extending along the upper and lower direction.

14. The battery pack according to claim 1,
wherein the inner space of the partition wall includes:
a fourth sub-flow path extending along a longitudinal direction of the partition wall; and
a fifth sub-flow path communicating with the fourth sub-flow path and extending along an upper and lower direction.

15. The battery pack according to claim 1, further comprising:
a module case installed on the upper surface of the base plate and providing a space therein,
wherein the plurality of battery cells are accommodated inside the module case.

16. A vehicle comprising the battery pack according to any one of claims 1 to 15.
